# FASCICULE DE BREVET EUROPEEN

(11) **EP 0 493 154 B1**
(45) Date de publication et mention de la délivrance du brevet: **17.08.1994**
(21) Numéro de dépôt: 91403237.0
(22) Date de dépôt: 29.11.1991
(51) Int. Cl.: G01B 7/00, F16D 25/12, F15B 15/28, G01D 5/25

(54) **Dispositif de mesure de la position d'une tige de poussée d'un servomoteur pneumatique**
Positionsmessvorrichtung für einem Stellglied eines pneumatischen Servomotors
Position measuring device for an actuator rod of a pneumatic servomotor

(30) Priorité: 20.12.1990 FR 9016026
(43) Date de publication de la demande: 01.07.1992
(73) Titulaire: ALLIEDSIGNAL EUROPE SERVICES TECHNIQUES, 93700 Drancy (FR)
(72) Inventeur: Gautier, Jean-Pierre, Bendix Europe, F-93700 Drancy (FR); Perez, Miguel, Bendix Europe, F-93700 Drancy (FR); Verbo, Ulysse, Bendix Europe, F-93700 Drancy (FR)

(56) Documents cités:
- EP-A- 0 345 459
- EP-A- 0 353 117
- DE-U- 8 813 834
- GB-A- 2 102 906
- GB-A- 2 108 678
- US-A- 4 091 902
- US-A- 4 664 239

## Description

La présente invention a pour objet un dispositif de mesure de la position d'une tige de poussée d'un servomoteur pneumatique, par exemple pour la commande d'un circuit de freinage ou d'un système d'embrayage.

Dans l'industrie automobile, il est devenu courant d'assister diverses commandes, actionnées par le conducteur du véhicule, telles que les commandes de freinage, de débrayage, ou d'autres, par divers dispositifs amplificateurs de force qui, pour un même effort de sortie, n'exigent du conducteur qu'un effort limité.

De tels dispositifs amplificateurs de force sont couramment constitués par des servomoteurs pneumatiques comprenant un boîtier divisé en une chambre avant et une chambre arrière par une paroi mobile déplaçable à partir d'une position de repos voisine de la paroi arrière du boîtier. Ces servomoteurs ont un fonctionnement entièrement satisfaisant.

Cependant, pour des raisons de sécurité et/ou de bon fonctionnement, il est désirable de connaître à tout instant l'état de ces dispositifs amplificateurs de force, afin d'actionner un signal d'alarme en cas de défaillance, pour commander d'autres dispositifs ou pour influer sur une boucle de rétro action.

On connaît par le document FR-A-2 509 883 un servomoteur d'assistance au débrayage comprenant un releveur de mesure de la position de la course du servomoteur, constitué d'une bande conductrice s'étendant dans la direction de cette course, et d'une prise portée par la tige mobile du servomoteur, la bande conductrice et la prise formant ensemble un potentiomètre linéaire délivrant un signal de mesure pour commander le fonctionnement du servomoteur.

Dans ce document, le releveur de mesure est intégré dans le carter du servomoteur, ce qui impose à ce dernier d'être de conception spéciale et relativement complexe, interdisant son utilisation sur des servomoteurs de conception classique. Un dispositif analogue est également divulgué par le document EP-A-0 353 117.

Pour pallier cet inconvénient, l'invention a pour but de proposer un dispositif de mesure de la position de la tige de poussée d'un servomoteur actionné pneumatiquement, qui soit adaptable à des boîtiers de servomoteur de type classique, sans modification de ces derniers, et sans augmentation de leur encombrement.

Dans ce but, l'invention propose un servomoteur comprenant un boîtier divisé en une chambre avant et une chambre arrière par une paroi mobile ramenée dans sa position de repos par un ressort de rappel hélicoïdal et propre à entraîner une tige de poussée actionnant un piston d'un maître-cylindre, la paroi mobile et la tige de poussée constituant deux éléments mobiles à l'intérieur du boîtier, et ce servomoteur comprenant un dispositif de mesure de la position d'un des éléments mobiles, comportant une première partie fixe par rapport au boîtier du servomoteur et une seconde partie mobile, les première et seconde parties portant des contacts électriques, caractérisé en ce que les première et seconde parties sont cylindriques et coaxiales, et en ce qu'elles sont disposées à l'intérieur du ressort de rappel et autour de la tige de poussée, dont la position est indiquée par ce dispositif de mesure.

D'autres caractéristiques et avantages de la présente invention ressortiront plus clairement de la description qui suit, donnée à titre non limitatif en référence aux dessins annexés sur lesquels :
- La Figure 1 représente en coupe un servomoteur pneumatique comportant un dispositif de mesure selon la présente invention,
- La Figure 2 représente en perspective la première partie fixe d'un premier mode de réalisation d'un dispositif de mesure conformément à la présente invention,
- La Figure 3 représente en coupe selon la ligne III-III de la Figure 1 la première partie fixe du dispositif de mesure,
- La Figure 4 représente en perspective la seconde partie mobile,
- La Figure 5 représente en perspective la première partie fixe d'un second mode de réalisation du dispositif de mesure selon la présente invention,
- La Figure 6 représente en coupe partielle un servomoteur pneumatique comportant un dispositif de mesure selon une première variante de l'invention, et
- La Figure 7 représente en coupe partielle un servomoteur pneumatique comportant un dispositif de mesure selon une seconde variante de l'invention.

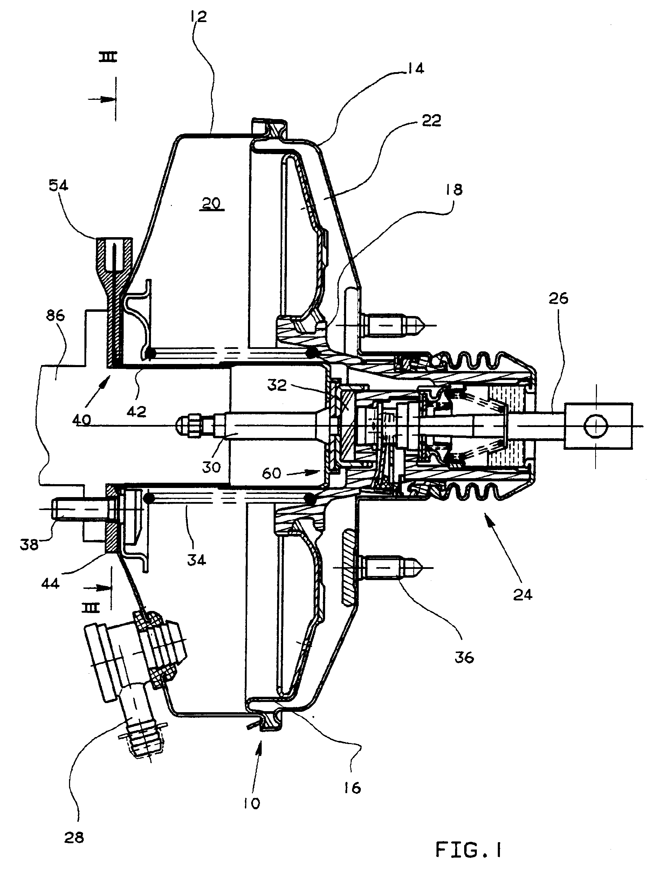

On a représenté sur la Figure 1 un servomoteur pneumatique, par exemple pour l'assistance au freinage, incorporant un dispositif de mesure réalisé selon la présente invention. Par convention, on appellera "avant" la direction dans laquelle les pièces mobiles se meuvent lorsqu'elles sont actionnées et "arrière" la direction dans la quelle elles reviennent pour reprendre leurs position de repos. Ainsi sur les Figures, l'avant est à gauche et l'arrière est à droite.

Le servomoteur représenté sur la Figure 1 comporte de façon classique un boîtier 10 formé d'une coquille avant 12 et d'une coquille arrière 14 réunies de façon étanche et renfermant une membrane déroulante 16 fixée par sa périphérie intérieure à un piston mobile 18. La membrane 16 et le piston 18 divisent le boîtier 10 en une chambre avant 20 et une chambre arrière 22, qui peuvent être sélectivement isolées ou mises en communication par des moyens de valve 24 lors de l'actionnement du servomoteur par sa tige de commande 26. De façon connue, les chambres avant 20 et arrière 22 communiquent lorsque le servomoteur est dans sa position de repos représentée, et sont sous une pression réduite amenée par l'embout 28 dans la chambre avant 20, et elles sont isolées lors d'un actionnement du servomoteur, de l'air à la pression atmosphérique étant alors introduit dans la chambre arrière 22 par la valve 24. La différence des pressions régnant de chaque côté du piston 18 fait avancer celui-ci, entraînant dans son mouvement une tige de poussée 30 par l'intermédiaire d'un disque de réaction 32. La tige de poussée 30 actionne alors à son tour le piston d'un maître-cylindre d'un circuit de freinage ou un émetteur d'embrayage (non représentés). Après avoir été actionné, le servomoteur retourne à sa position de repos représentée sous l'action du ressort de rappel 34 disposé entre la coquille avant 12 et le piston 18. De façon également connue, le servomoteur est fixé sur une partie fixe du véhicule, par exemple, le tablier, par des boulons 36 sur sa partie arrière, et il est relié au maître-cylindre ou à l'émetteur d'embrayage par des boulons 38 sur sa partie avant.

Conformément à la présente invention, un dispositif de mesure de la position de la tige de poussée du servomoteur a été prévu sur ce servomoteur. Un tel dispositif peut servir par exemple pour fermer un contact et ainsi allumer des feux d'avertissement de freinage (feux "stop"), ou mettre en position de veille un circuit d'antiblocage des roues, ou au contraire ouvrir un contact et ainsi désactiver d'autres circuits comme par exemple des circuits de régulation de vitesse. Ce dispositif de mesure est constitué de deux parties. La première partie 40 comporte une partie cylindrique 42 raccordée à une partie en forme de disque 44.

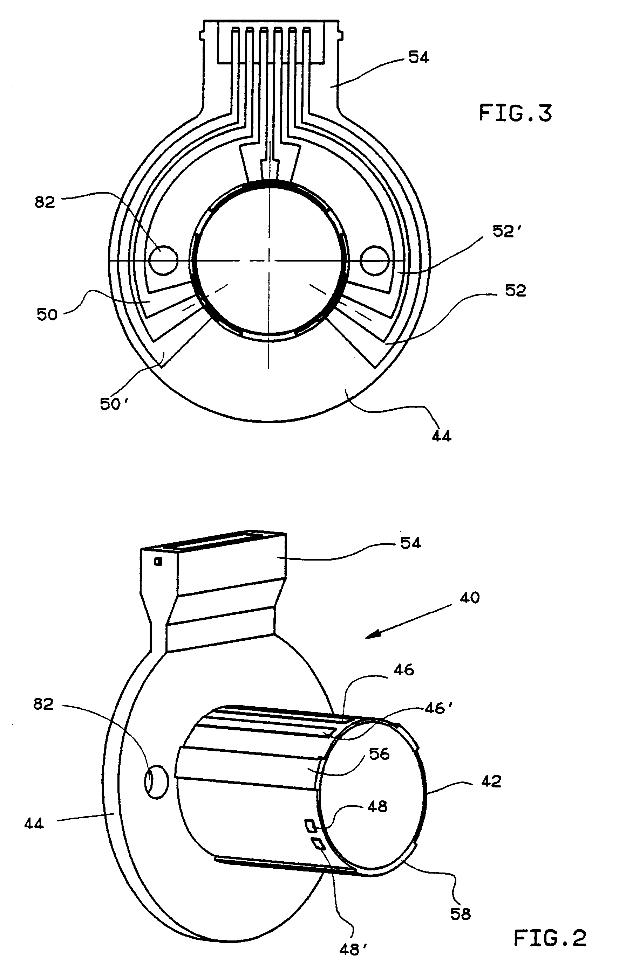

Comme on le voit mieux sur la Figure 2, la partie cylindrique 42 comporte sur sa périphérie extérieure des lamelles conductrices 46, 46′ s'étendant en direction axiale et des plots conducteurs 48, 48′ au voisinage de son extrémité arrière. Ces lamelles 46, 46′ et ces plots 48, 48′ sont électriquement reliés à des pistes conductrices 50, 50′ et 52, 52′ respectivement, formées sur ou dans la matière de la partie en forme de disque 44, comme on le voit sur la Figure 3. Ces pistes aboutissent à des bornes formées sur une extension 54 de la partie 44 qu'on pourra avantageusement réaliser sous forme de connecteur. La partie cylindrique 42 comporte également sur sa périphérie extérieure des cannelures 56, 58 s'étendant en direction axiale.

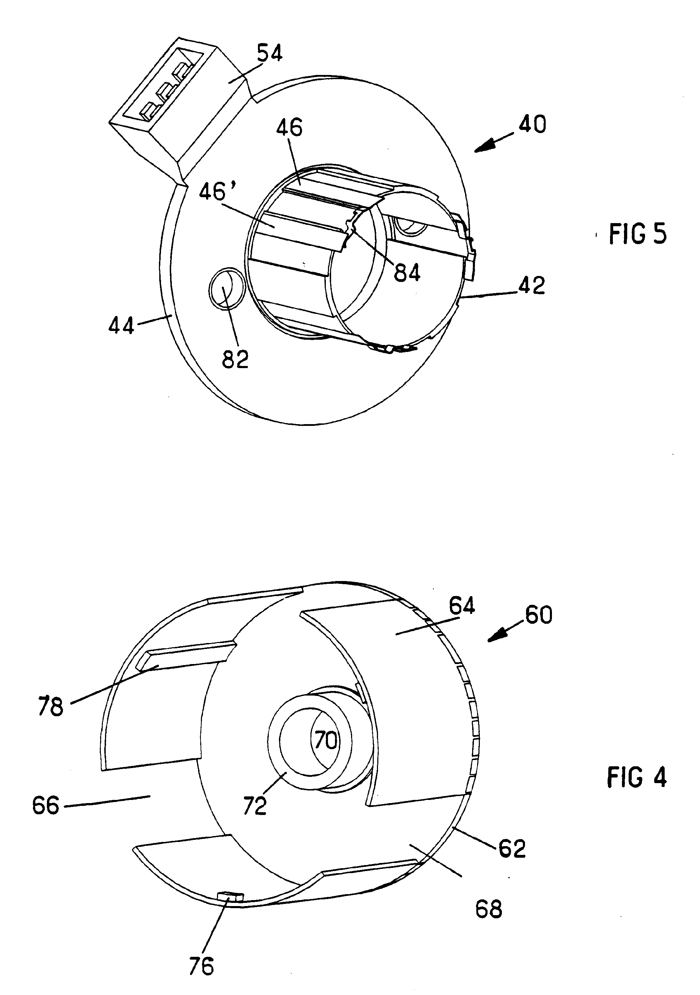

La seconde partie 60 du dispositif de mesure est représentée sur la Figure 4 et comporte un fond circulaire 62 prolongé vers l'avant par une partie cylindrique 64 dans laquelle ont été pratiqués des rainures ou des évidements 66, 68 destinés à coopérer avec les cannelures 56, 58 respectivement de la première partie pour assurer le guidage de la deuxième partie sur la première. De façon avantageuse, on pourra par exemple réaliser les cannelures 58 et les évidements 68 de largeur plus importante que celle des cannelures 56 et des évidements 66 de façon à assurer un détrompage lors du montage des deux parties l'une sur l'autre. Le fond circulaire 62 comporte en son centre une ouverture 70 entourée d'une collerette 72 dont l'utilité sera expliquée par la suite, l'ouverture 70 étant prévue pour le passage de la tige de poussée 30 du servomoteur.

A l'intérieur de la partie cylindrique 64 et au voisinage de son extrémité avant est disposé un plot conducteur 76 dont la longueur dans le sens circonférentiel est supérieure à la distance séparant les lamelles 46, 46′ ou les plots 48, 48′.

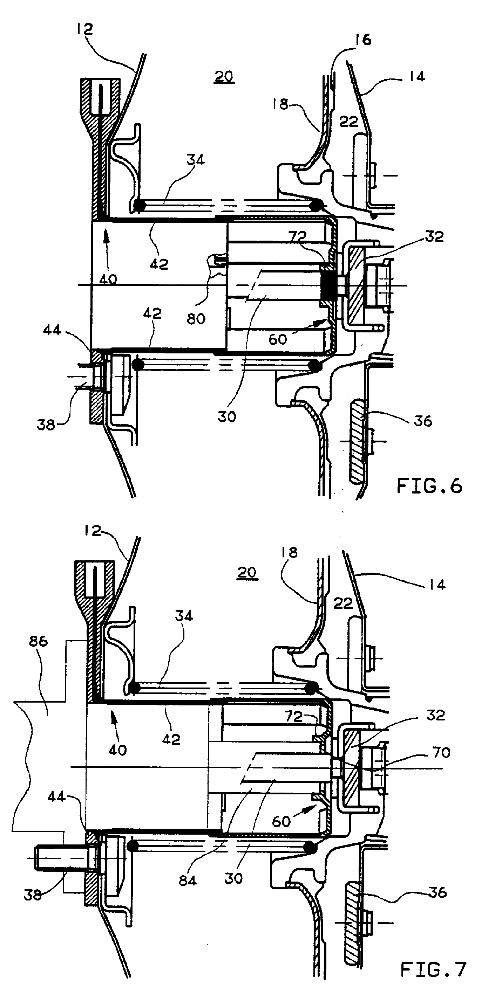

Le fonctionnement du dispositif de mesure qui vient d'être décrit se comprend aisément. Lorsque les première 40 et seconde 60 parties sont assemblées l'une sur l'autre, les cannelures 56, 58 pénètrent dans les rainures ou évidements 66, 68 respectivement et autorisent le coulissement axial des deux parties l'une par rapport à l'autre, et interdisent leur rotation relative. On pourra avantageusement prévoir un encliquetage des deux parties l'une sur l'autre, tel qu'illustré en 80 sur la Figure 6, pour permettre l'engagement facile de la deuxième partie 60 sur la première 40, et au contraire rendre leur désengagement difficile.

Le dispositif de mesure ainsi assemblé est mis en place dans un servomoteur ainsi qu'illustré à la Figure 1, la partie en forme de disque 44 de la première partie fixe 40 du dispositif de mesure venant reposer contre la face avant du servomoteur, alors que la seconde partie mobile 60 est amenée à sa position par engagement à force de la collerette 72 sur la tige de poussée 30 du servomoteur pour la fixer sur celle-ci, comme représenté sur la Figure 6. Dans cette position, l'extrémité avant de la seconde partie 60 est légèrement engagée sur l'extrémité arrière de la première partie 40. Il est alors possible d'installer sur le servomoteur ainsi équipé un maître-cylindre ou un émetteur d'embrayage grâce aux boulons 38 coopérant avec des ouvertures pratiquées dans la bride de montage du maître-cylindre 86, des ouvertures 82 ayant été avantageusement pratiquées dans la partie en forme de disque 44 pour le passage des boulons 38 de fixation du maître-cylindre 86 sur le boîtier 10 du servomoteur. Le maintien en place du dispositif de mesure s'effectue alors sans pièce supplémentaire.

Lors d'un actionnement du servomoteur, le mouvement de la tige de poussée 30 entraînera le mouvement de la seconde partie 60 par rapport à la première partie 40. Si le plot 76 est destiné à coopérer avec les lamelles 46, 46′, il viendra alors chevaucher ces lamelles dans son mouvement et établir un contact électrique entre elles, contact électrique qui sera alors établi entre les bonnes correspondantes du connecteur 54, pour par exemple provoquer l'allumage de feux d'avertissement de freinage si le servomoteur est relié à un maître-cylindre de freinage. Si par contre le plot 76 est destiné à coopérer avec les plots 48, 48′, il quittera ces plots dans son mouvement et ouvrira le contact électrique entre eux, laquelle ouverture de circuit pourra également être détectée aux bornes correspondantes du connecteur 54, par exemple mettre hors fonction un circuit de régulation de vitesse.

Au lieu d'un plot 76 dans la seconde partie 60, on peut disposer une lamelle conductrice 78 (Figure 4). Comme précédemment, lors du mouvement de la seconde partie 60 par rapport à la première partie 40, la lamelle 78 viendra chevaucher les plots 48, 48′ ou les lamelles 46, 46′ de la première partie 40 et ainsi établir un contact électrique entre les bornes correspondantes du connecteur 54.

Dans une forme de réalisation avantageuse, les lamelles 46, 46′ de la première partie 40 peuvent être réalisées en matériau électriquement résistif tel que celui qui est utilisé dans les potentiomètres linéaires. Entre les bornes correspondantes du connecteur 54, on aura donc une grandeur électrique, comme par exemple la résistance électrique, variable continûment en fonction en fonction de la position relative des deux parties du dispositif de mesure, et non plus en tout ou rien comme dans le cas précédent. Dans une forme de réalisation également avantageuse, la lamelle conductrice 78 peut être recouverte d'un matériau di électrique tel qu'un vernis, ainsi que les lamelles 46, 46′. De la sorte, lors du mouvement de la seconde partie 60 par rapport à la première partie 40, les lamelles 46, 46′ et 78 forment les armatures d'un condensateur dont la capacité, mesurée aux bornes correspondantes du connecteur 54, sera ainsi variable en fonction de la position relative des première et seconde parties 40 et 60. Le vernis déposé sur les lamelles a simultanément pour rôle d'éviter que la lamelle 78 ne rentre en contact, dans cette forme de réalisation, avec les lamelles 46 et 46′, contact qui pourrait être occasionné par les vibrations du véhicule. On peut également prévoir de mesurer aux bornes du connecteur 54 une inductance variable en fonction de la position relative des première et seconde parties 40 et 60.

On a représenté sur la Figure 5 un second mode de réalisation de la première partie 40 du dispositif de mesure selon la présente invention. Selon ce mode de réalisation, une des lamelles 46 ou 46′ précédemment décrite est formée avec une languette 84 à son extrémité arrière, languette s'étendant perpendiculairement à la direction axiale de la lamelle 46 par exemple, et donc dans un sens circonférentiel, de façon à venir prendre appui, par élasticité, sur la face de l'autre lamelle 46′ tournée vers l'intérieur du dispositif.

Lors d'un actionnement du servomoteur, si la languette 84 est destinée à coopérer avec le plot 76, ce dernier quittera la languette 84 dans son mouvement et lui permettra de revenir en appui sur la lamelle 46′, établissant ainsi le contact entre les lamelles 46 et 46′ et les bornes correspondantes du connecteur 54. Si par contre la languette 84 est destinée à coopérer avec la lamelle 78, cette dernière viendra appuyer sur la languette 84 dans son mouvement pour lui faire perdre le contact avec la lamelle 46′ et ainsi ouvrir le contact entre ces lamelles, et donc entre les bornes correspondantes du connecteur 54.

On notera que dans ce mode de réalisation, il n'est pas nécessaire de réaliser la lamelle 78 et le plot 76 en matériau électriquement conducteur, ce qui simplifie la réalisation de la deuxième partie 60. On notera également que dans ce mode de réalisation, le contact électrique est établi ou interrompu toujours au même endroit, c'est-à-dire au point où la languette 84 prend appui au repos sur la lamelle 46′. Il s'agit donc d'un contact franc, par opposition aux contacts glissants décrits en relation avec le mode de réalisation précédent. On pourra de façon avantageuse réaliser le bord avant de la lamelle 78 ou le bord arrière du plot 76 selon un profil en biseau pour faciliter leur engagement avec la languette 84.

On a représenté sur la Figure 7 une variante du mode de réalisation représenté sur la Figure 6. On voit sur cette Figure que l'ouverture 70 pratiquée dans le fond circulaire 62 de la seconde partie 60 à un diamètre supérieur à celui de la tige de poussée 30, alors que la colonnette 72 à un diamètre intérieur égal au diamètre extérieur du piston 84 du maître-cylindre ou de l'émetteur d'embrayage 86 actionné par le servomoteur.

Une fois les première 40 et seconde 60 parties assemblées l'une sur l'autre, et encliquetées comme on l'a expliqué en référence à la Figure 6, le dispositif de mesure est mis en place directement sur la partie arrière 86 du maître-cylindre. La collerette 72 vient alors se placer et se fixer autour du piston 84 comme indiqué précédemment.

De façon avantageuse, on pourra prévoir que le diamètre intérieur de la partie cylindrique 42 de la première partie 40 soit égal au diamètre extérieur de la partie arrière 86 du maître-cylindre, de sorte que le dispositif de mesure reste fixé au maître-cylindre. Il suffit alors d'introduite celui-ci ainsi équipé dans le servomoteur comme on le fait de façon habituelle.

## Revendications

1. Servomoteur comprenant un boîtier (10) divisé en une chambre avant (20) et une chambre arrière (22) par une paroi mobile (18) ramenée dans sa position de repos par un ressort de rappel hélicoïdal (34) et propre à entraîner une tige de poussée (30) actionnant un piston (84) d'un maître-cylindre (86), la paroi mobile et la tige de poussée constituant deux éléments mobiles à l'intérieur du boîtier, et ce servomoteur comprenant un dispositif de mesure de la position d'un des éléments mobiles, comportant une première partie (40) fixe par rapport au boîtier (10) du servomoteur et une seconde partie (60) mobile, les première (40) et seconde (60) parties portant des contacts électriques (46, 46′, 48, 48′, 84; 76, 78), caractérisé en ce que les première (40) et seconde (60) parties sont cylindriques et coaxiales, et en ce qu'elles sont disposées à l'intérieur du ressort de rappel (34) et autour de la tige de poussée (30), dont la position est indiquée par ce dispositif de mesure.

2. Servomoteur selon la revendication 1, caractérisé en ce que les contacts électriques (46, 46′, 48, 48′, 84) sont reliés à des bornes formées sur une extension (54) de la première partie (40).

3. Servomoteur selon la revendication 2, caractérisé en ce que l'extension (54) de la première partie (40) est réalisée sous forme de connecteur (54).

4. Servomoteur selon la revendication 3, caractérisé en ce que lors de l'actionnement du piston (84) du maître-cylindre (86), les contacts électriques (46, 46′, 48, 48′, 84 ; 76,78) ouvrent un circuit électrique entre les bornes du connecteur (54).

5. Servomoteur selon la revendication 3, caractérisé en ce que lors de l'actionnement du piston (84) du maître-cylindre (86), les contacts électriques (46, 46′, 48, 48′, 84 ; 76, 78) ferment un circuit électrique entre les bornes du connecteur (54).

6. Servomoteur selon la revendication 3, caractérisé en ce que lors de l'actionnement du piston (84) du maître-cylindre (86), les contacts électriques (46, 46′, 48, 48′, 84 ; 76, 78) font varier une grandeur électrique entre les bornes du connecteur (54).

7. Servomoteur selon l'une des revendications précédentes, caractérisé en ce que la seconde partie (60) du dispositif de mesure est fixée sur la tige de poussée (30) du servomoteur.

8. Servomoteur selon l'une des revendications 1 à 6, caractérisé en ce que le dispositif de mesure est disposé sur le maître-cylindre (86), la première partie (40) étant fixée au maître-cylindre (86), et la seconde partie (60) étant fixée au piston (84) du maître-cylindre (86).

9. Servomoteur selon l'une des revendications précédentes, caractérisé en ce que le dispositif de mesure est disposé entre le maître-cylindre (86) et le servomoteur.

10. Servomoteur selon la revendication 9, caractérisé en ce que le dispositif de mesure est disposé dans la chambre avant (20) autour d'une partie arrière du maître-cylindre (86).

11. Servomoteur selon la revendication 10, caractérisé en ce que le dispositif de mesure comporte une partie en forme de disque (44) formée sur la première partie (40) disposée entre une face avant du boîtier (10) et une bride de montage du maître-cylindre (86).

12. Servomoteur selon la revendication 11, caractérisé en ce que le dispositif de mesure comporte des ouvertures (82) pour le passage des boulons (38) de fixation du maître-cylindre (86) sur le boîtier (10) du servomoteur.

## Patentansprüche

1. Servomotor mit einem Gehäuse (10), das in eine vordere Kammer (20) und eine hintere Kammer (22) durch eine bewegliche Wand (18) unterteilt ist, die in ihre Ruhestellung durch eine Rückstell-Schraubenfeder (34) zurückgestellt wird und in der Lage ist, eine Schubstange (30) zu bewegen, die einen Kolben (84) eines Hauptzylinders (86) betätigt, wobei die bewegliche Wand und die Schubstange zwei bewegliche Elemente im Inneren des Gehäuses bilden und wobei dieser Servomotor für die Position von einem der beweglichen Elemente eine Meßvorrichtung enthält, die ein bezüglich des Gehäuses (10) des Servomotors feststehendes erstes Teil (40) und ein bewegliches zweites Teil (60) besitzt, wobei das erste Teil (40) und das zweite Teil (60) elektrische Kontakte (46, 46′, 48, 48′, 84; 76, 78) tragen, dadurch gekennzeichnet, daß das erste Teil (40) und das zweite Teil (60) zylindrisch und zueinander koaxial sind und daß sie im Inneren der Rückstellfeder (34) und um die Schubstange (30) herum angeordnet sind, deren Position von dieser Meßvorrichtung angezeigt wird.

2. Servomotor nach Anspruch 1, dadurch gekennzeichnet, daß die elektrischen Kontakte (46, 46′, 48, 48′, 84) mit Anschlußklemmen verbunden sind, die auf einer Erweiterung (54) des ersten Teils (40) gebildet sind.

3. Servomotor nach Anspruch 2, dadurch gekennzeichnet, daß die Erweiterung (54) des ersten Teils (40) in der Form eines Anschlusses (54) gebildet ist.

4. Servomotor nach Anspruch 3, dadurch gekennzeichnet, daß bei einer Betätigung des Kolbens (84) des Hauptzylinders (86) die elektrischen Kontakte (46, 46′, 48, 48′, 84; 76, 78) einen elektrischen Kreis zwischen den Anschlußklemmen des Anschlusses (54) öffnen.

5. Servomotor nach Anspruch 3, dadurch gekennzeichnet, daß bei einer Betätigung des Kolbens (84) des Hauptzylinders (86) die elektrischen Kontakte (46, 46′, 48, 48′, 84; 76, 78) einen elektrischen Kreis zwischen den Anschlußklemmen des Anschlusses (54) schließen.

6. Servomotor nach Anspruch 3, dadurch gekennzeichnet, daß bei einer Betätigung des Kolbens (84) des Hauptzylinders (86) die elektrischen Kontakte (46, 46′, 48, 48′, 84; 76, 78) eine elektrische Größe zwischen den Anschlußklemmen des Anschlusses (54) verändern.

7. Servomotor nach einem der vorhergehenden Ansprüche, dadurch gekennzeichnet, daß das zweite Teil (60) der Meßvorrichtung an der Schubstange (30) des Servomotors befestigt ist.

8. Servomotor nach einem der Ansprüche 1 bis 6, dadurch gekennzeichnet, daß die Meßvorrichtung auf dem Hauptzylinder (86) angeordnet ist, wobei das erste Teil (40) am Hauptzylinder (86) befestigt ist und das zweite Teil (60) am Kolben (84) des Hauptzylinders (86) befestigt ist.

9. Servomotor nach einem der vorhergehenden Ansprüche, dadurch gekennzeichnet, daß die Meßvorrichtung zwischen dem Hauptzylinder (86) und dem Servomotor angeordnet ist.

10. Servomotor nach Anspruch 9, dadurch gekennzeichnet, daß die Meßvorrichtung in der vorderen Kammer (20) um einen hinteren Abschnitt des Hauptzylinders (86) herum angeordnet ist.

11. Servomotor nach Anspruch 10, dadurch gekennzeichnet, daß die Meßvorrichtung einen Abschnitt in Form einer Scheibe (44) enthält, der auf dem ersten Teil (40) zwischen einer vorderen Fläche des Gehäuses (10) und einem Montageflansch des Hauptzylinders (86) angeordnet ausgebildet ist.

12. Servomotor nach Anspruch 11, dadurch gekennzeichnet, daß die Meßvorrichtung Öffnungen (82) für den Durchgang von Befestigungsbolzen (38) des Hauptzylinders (86) am Gehäuse (10) des Servomotors besitzt.

## Claims

1. Booster comprising a housing (10) divided into a front chamber (20) and a rear chamber (22) by means of a moveable wall (18) returned to its rest position by a helical restoring spring (34) and capable of driving a push rod (30) actuating a piston (84) of a master cylinder (86), the moveable wall and the push rod forming two elements moveable within the housing, and this booster comprising a device for measuring the position of one of the moveable elements, comprising a first part (40) fixed relative to the housing (10) of the booster and a moveable second part (60), the first (40) and second (60) parts carrying electrical contacts (46, 46′, 48, 48′, 84; 76, 78), characterized in that the first (40) and second (60) parts are cylindrical and coaxial, and in that they are arranged inside the restoring spring (34) and around the push rod (30), the position of which is indicated by this measuring device.

2. Booster according to Claim 1, characterized in that the electrical contacts (46, 46′, 48, 48′, 84) are connected to terminals formed on an extension (54) of the first part (40).

3. Booster according to Claim 2, characterized in that the extension (54) of the first part (40) is produced in the form of a connector (54).

4. Booster according to Claim 3, characterized in that, during the actuation of the piston (84) of the master cylinder (86), the electrical contacts (46, 46′, 48, 48′, 84 ; 76, 78) open an electrical circuit between the terminals of the connector (54).

5. Booster according to Claim 3, characterized in that, during the actuation of the piston (84) of the master cylinder (86), the electrical contacts (46, 46′, 48, 48′, 84 ; 76, 78) close an electrical circuit between the terminals of the connector (54).

6. Booster according to Claim 3, characterized in that, during the actuation of the piston (84) of the master cylinder (86), the electrical contacts (46, 46′, 48, 48′, 84 ; 76, 78) cause an electrical quantity to vary between the terminals of the connector (54).

7. Booster according to any of the preceding claims, characterized in that the second part (60) of the measuring device is fastened to the push rod (30) of the booster.

8. Booster according to any of Claims 1 to 6, characterized in that the measuring device is arranged on the master cylinder (86), the first part (40) being fastened to the master cylinder (86), and the second part (60) being fastened to the piston (84) of the master cylinder (86).

9. Booster according to any of the preceding claims, characterized in that the measuring device is arranged between the master cylinder (86) and the booster.

10. Booster according to Claim 9, characterized in that the measuring device is arranged in the front chamber (20) round a rear part of the master cylinder (86).

11. Booster according to Claim 10, characterized in that the measuring device comprises a disc-shaped part (44) formed on the first part (40) arranged between a front face of the housing (10) and a mounting flange of the master cylinder (86).

12. Booster according to Claim 11, characterized in that the measuring device comprises orifices (82) for the passage of bolts (38) for fastening the master cylinder (86) to the housing (10) of the booster.
